# EUROPÄISCHE PATENTSCHRIFT

(11) **EP 2 812 595 B1**
(45) Veröffentlichungstag und Bekanntmachung des Hinweises auf die Patenterteilung: **05.01.2022**
(21) Anmeldenummer: 13703040.9
(22) Anmeldetag: 06.02.2013
(51) Int. Cl.: F16D 55/226, F16D 65/097

(54) **BELAGHALTESYSTEM EINER SCHEIBENBREMSE EINES KRAFTFAHRZEUGS**
PAD RETENTION SYSTEM OF A DISC BRAKE OF A MOTOR VEHICLE
SYSTÈME DE RETENUE DE GARNITURE D'UN FREIN À DISQUE D'UN VÉHICULE À MOTEUR

(30) Priorität: 10.02.2012 DE 102012002734
(43) Veröffentlichungstag der Anmeldung: 17.12.2014
(73) Patentinhaber: KNORR-BREMSE Systeme für Nutzfahrzeuge GmbH, 80809 München (DE)
(72) Erfinder: BAUMGARTNER, Johann, 85368 Moosburg (DE); PESCHEL, Michael, 82296 Schöngeising (DE); WERTH, Alexander, 80999 München (DE)
(86) Internationale Anmeldenummer: PCT/EP2013/052276
(87) Internationale Veröffentlichungsnummer: WO 2013/117561

(56) Entgegenhaltungen:
- EP-A1- 2 213 900
- DE-A1- 19 953 159
- FR-A- 1 492 833
- US-B1- 6 305 506

## Beschreibung

Die vorliegende Erfindung betritt ein Belaghaltesystem einer Scheibenbremse eines Kraftfahrzeugs, insbesondere eines Nutzfahrzeugs gemäß dem Oberbegriff des Anspruchs 1.

Derartige Belaghaltesysteme von Scheibenbremsen sind in zahlreichen Ausführungsvarianten aus dem Stand der Technik bekannt.

Dabei werden die Bremsbeläge üblicherweise im Belagschacht eines Bremsträgers geführt und gegen einen Belaghaltebügel an ein den Bremsträger übergreifenden Bremssattel mithilfe einer Belaghaltefeder gesichert. Die Belaghaltefeder drückt dabei den Bremsbelag mit einer Kraft F_{F} gegen den Bremsträger. Während eines Bremsvorgangs kann sich der Bremsbelag infolge des auf den Bremsbelag übertragenen Drehmomentes M gegen die Federkraft der Belaghaltefeder um einen Drehpunkt bewegen, wobei der Drehpunkt hier im Bereich eines oberen Endes des auslaufseitigen Trägerhorns des Bremsträgers zu finden ist.

Da es durch die Bewegung des Bremsbelags zu einer Drehmomentübertragung auf ein Druckstück des Bremssattels und ein daran angeordnetes Gewinderohr kommen kann, kann die Drehung des Bremsbelags zu einer ungewollten Verschleißnachstellung führen.

Um eine solche Drehbewegung des Bremssattels zu verhindern, ist auch ein formschlüssiges Festhalten des Bremsbelags in durch die Trägerhörner des Bremsträgers sowie ein die Trägerhörner verbindendes Brückenstück des Bremsträgers gebildeten Bremsbelagschachtes nicht zielführend, da fertigungsbedingte Toleranzen der Bremsbeläge und des Bremsträgers ein Mindestspiel erfordern.

Aus der US 6 305 506 B1 und der FR 1 492 833 A sind Belaghaltesysteme bekannt, bei denen eine als Blattfeder ausgebildete Belaghaltefeder zwischen einer dem Brückenteil des Bremsträgers zugewandten Seite des Bremsbelags und dem Brückenteil des Bremsträgers im Beschlagschacht angeordnet ist, wobei die Belaghaltefeder im montierten Zustand den Bremsbelag vor dem Brückenteil des Bremsträgers weg spielfrei gegen die Trägerhörner drückt.

Die DE 199 53 159 A1 offenbart ein Belaghaltesystem, bei dem anstelle der Blattfeder ein Bremsbelagclips etwa mittig am Brückenteil befestigt ist, der den Bremsbelag nach außen, d.h. von der Brücke weg drückt.

Aus der EP 2 213 900 A1 ist ein Belaghaltesystem bekannt, bei dem seitlich am Bremsbelag und seitlich am Brückenteil Belaghaltefedern befestigt sind, die den Bremsbelag nach außen, d.h. von der Brücke weg sowie axial von der Bremsscheibe weg drücken.

Aufgabe der vorliegenden Erfindung ist es, die oben beschriebene Drehung des Bremsbelags während eines Bremsvorgangs wirksam zu verhindern.

Diese Aufgabe wird durch ein Belaghaltesystem einer Scheibenbremse eines Kraftfahrzeugs mit den Merkmalen des Anspruchs 1 sowie durch ein Belaghaltesystem einer Scheibenbremse eines Kraftfahrzeugs mit den Merkmalen des Anspruchs 3 gelöst.

Ein in diesem Sinne gemäß Anspruch 1 ausgebildetes Belaghaltesystem zeichnet sich vor allem dadurch aus, dass die mindestens eine Belaghaltefeder in einer Aussparung an der dem Brückenteil gegenüber liegenden Belagträgerplatte des Bremsbelags gehalten ist.

Durch die Anordnung der Belaghaltefedern derart, dass diese den Bremsbelag nicht in Richtung des Brückenteils des Bremsträgers, sondern entgegengesetzt radial noch außen drückt, wird der Bremsbelag mit der Kraft F_{F} direkt in den Formschluss zwischen Bremsbelag und Bremsträgerhorn gedrückt, wodurch im kraftfreien Zustand, sprich in einem Zustand, in dem kein Bremsvorgang stattfindet, der Bremsbelag radial nach außen sich in Formschluss mit den Bremsträgerhörnern befindet, wobei gleichzeitig die erforderliche Toleranz zum Einbau und Ausbau des Bremsbelags aus dem Bremsbelagschacht bzw. in den Bremsbelagschacht vorhanden ist und auch ein erforderlicher Wärmedehnungsausgleich gewährleistet ist. Wird nun ein Bremsvorgang eingeleitet, so wäre toleranzbedingt nur ein Abkippen des Bremsbelags im Bereich des Auslaufseitigen Trägerhorns möglich, was jedoch durch die am auslaufseitigen Bremsträgerhorn vorherrschende Reibkraft F_{R} durch die Anlage der Bremsbelagseite am auslaufseitigen Bremsträgerhorn verhindert wird.

Durch die Anlage des Bremsbelags an der radial außen liegenden Seite des Formschlusses verschiebt sich der Drehpunkt des Bremsbelags bei eingeleitetem Drehmoment aufgrund eines Bremsvorgangs von dem auslaufseitigen Trägerhorn hin zum einlaufseitigen Trägerhorn, womit erreicht wird, dass eine Drehbewegung des Bremsbelags in eine in Richtung einer Hauptdrehrichtung der Bremsscheibe wirksam verhindert wird.

Gemäß der mit Anspruch 3 beanspruchten alternativen Ausführungsvariante ist das Belaghaltesystem derart ausgeführt, dass die Belaghaltefeder an einen am Bremssattel befestigten Belaghaltebügel abgestützt ist, wobei die Belaghaltefeder als Zugfeder ausgebildet ist. Auch mit dieser erfindungsgemäßen Anordnung lässt sich der Bremsbelag am radial außen liegenden Bereich der Trägerhörner in Formschluss halten, so dass die gewünschte Wirkung der Drehhemmung im Bremsfalle auch mit dieser Anordnung wirksam verhindert wird.

Vorteilhafte Ausführungsvarianten der Erfindung sind Gegenstand der Unteransprüche.

Gemäß vorteilhaften Ausführungsvarianten des Belaghaltesystems gemäß Anspruch 3 ist die Belaghaltefeder als Blattfeder, als Spiralfeder, Tellerfeder oder auch als Drehfeder bzw. Torsionsfeder ausgeführt, welche sämtlich in der Lage sind, den Bremsbelag im bremsfreien Zustand in Formschluss an ihrer radial außen liegenden Seite der Trägerhörner bzw. des Bremsbelags zu halten.

Nachfolgend werden Ausführungsbeispiele der Erfindung anhand der beiliegenden Zeichnungen näher beschrieben.

### Es zeigen:

- Figur 1: eine Frontansicht auf ein aus dem Stand der Technik bekanntes Belaghaltesystem,
- Figur 2: eine Frontansicht auf eine erste Ausführungsvariante eines erfindungsgemäßen Belaghaltesystem,
- Figuren 3 bis 7: weitere Frontansichten von nicht erfindungsgemäßen Ausführungsvarianten eines Belaghaltesystems.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Behalthaltesystems, des Bremsträgers, der Belaghaltefeder und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

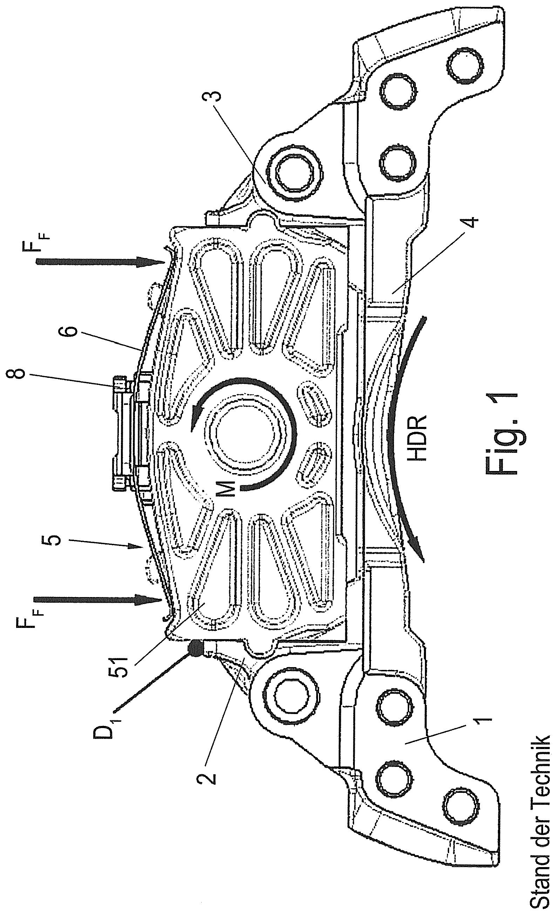

In der Figur 1 ist eine Frontansicht eines aus dem Stand der Technik bekannten Belaghaltesystems einer Scheibenbremse eines Kraftfahrzeugs dargestellt. Das Belaghaltesystem weist einen Bremsträger 1 mit zwei Trägerhörnern 2, 3 auf, die miteinander durch ein Brückenteil 4 verbunden sind und zusammen einen Belagschacht 7 bilden, in dem beidseitig eine nicht gezeigte Bremsscheibe zugeordneter Bremsbeläge 5 positionierbar sind.

Der Bremsbelag 5 selbst besteht dabei aus einer Bremsbelagplatte 51 und einem der Bremsscheibe 5 zugewandten (nicht gezeigten) Reibbelag.

Die Bremsbeläge werden dabei im montierten Zustand mithilfe einer Belaghaltefeder 6 federbelastet in dem Belagschacht 7 ortsfest gehalten. Die Belaghaltefeder 6 ist dabei an einem Belaghaltebügel 8 des (nicht gezeigten) Bremssattels befestigt und drückt den Bremsbelag 5 mit der Federkraft F_{F} gegen den Bremsträger 1 in Richtung der Trägerbrücke 4.

Wird nun ein Bremsvorgang eingeleitet, so wird der Bremsbelag gegen die Bremsscheibe gedrückt, wodurch ein durch die Drehung der Bremsscheibe in eine Hauptdrehrichtung HDR gegen die Federkraft der an der Belaghaltefeder und um einen Drehpunkt D bewegt, der sich am oberen Ende des auslaufseitigen Trägerhorns 2 befindet. Zur Verhinderung dieser Drehbewegung reicht auch ein Formschluss des Bremsbelags 5 mit den Trägerhörnern 2, 3 des Bremsträgers 1, beispielsweise durch Ausbildung seitlicher Ausstülpungen an der Belagträgerplatte 51 und entsprechende Aussparungen an den dem Bremsbelag 5 zugewandten Innenseiten der Trägerhörner 2, 3 nicht aus, da fertigungsbedingte Toleranzen dieser Bauteile ein Mindestspiel erfordern.

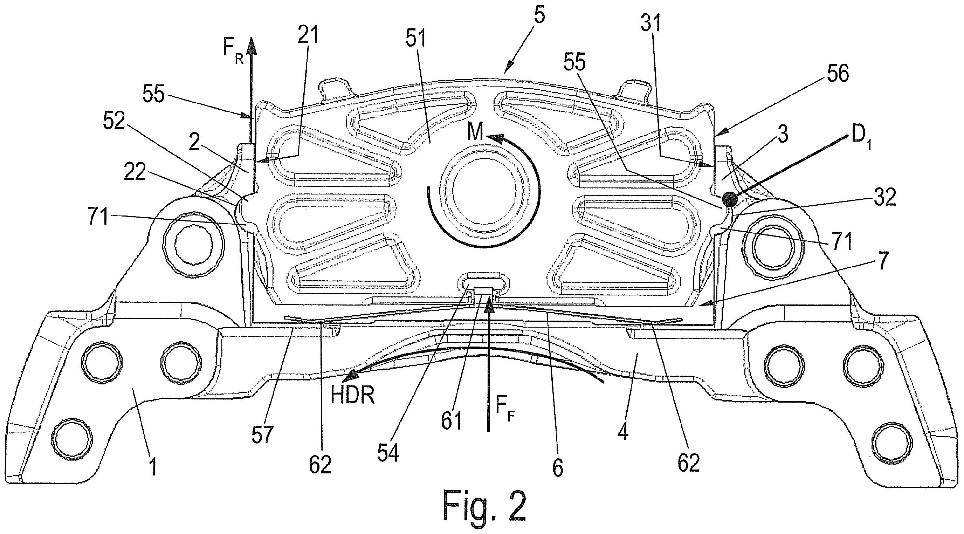

In Figur 2 ist eine erste bevorzugte Ausführungsvariante eines erfindungsgemäßen Belaghaltesystems eines Kraftfahrzeugs gezeigt.

Im Gegensatz zu dem in Figur 1 gezeigten Belaghaltesystem ist die Belaghaltefeder derart angeordnet, dass die im montierten Zustand den Bremsbelag 5 von dem Brückenteil 4 des Bremsträgers 1 weg spielfrei gegen die Trägerhörner 2, 3 drückt.

Die Belaghaltefeder ist dabei in der in Figur 2 dargestellten Ausführungsvariante als Blattfeder ausgebildet, die zentral in einer Aussparung 54 an der dem Brückenteil 4 gegenüber liegenden Seite 57 der Belagträgerplatte 51 des Bremsbelags 5, vorzugsweise durch einen Haltebügel 61, der die Belaghaltefeder 6 senkrecht zu deren Längserstreckung umgreift, gehalten ist. Die beiden Endbereiche 62 der Belaghaltefeder 6 stützen sich dabei auf der dem Bremsbelag zugewandten Oberseite des Brückenteils 4 und drücken dadurch den Bremsbelag 5 mit der Kraft F_{F} mit an den Seitenflächen 55, 56 der Belagträgerplatte 51 angeformten Vorsprüngen 52, 53 gegen den radial außen liegenden Rand von Aussparungen 22, 32 an den dem Bremsbelag 5 zugewandten Innenseiten 21, 31 der Trägerhörner 2, 3.

Die durch den nach oben gedrückten Bremsbelag 5 entstehende Lücke 71 zwischen der Unterseite 57 des Bremsbelags und der Oberseite des Brückenteils 4 sowie zwischen dem dem Brückenteil 4 nahen Bereich der Aussparungen 22, 32 und den Vorsprüngen 52, 53 der Belagträgerplatte 51 gewährleistet den bei einem solchen Belaghaltesystem erforderlichen Wärmedehnungsausgleich sowie die erforderliche Toleranz zum Ein- und Ausbau des Bremsbelags 5.

Ein bedeutender Vorteil ergibt sich jedoch daraus, das durch die Anhebung des Bremsbelags derart, dass der Bremsbelag 5 nunmehr radial außen an den Aussparungen 22, 3,2 der Trägerhörner 2, 3 anliegt und damit ein bei einem Bremsvorgang angreifendes Drehmoment M den Drehpunkt D1 von der Oberkante des auslaufseitigen Trägerhorns 2 zum Berührungsbereich des Vorsprungs 53 des der Belagträgerplatte 51 mit der Ausnehmung 32 des einlaufseitigen Trägerhorns 3 verschiebt, so dass der Bremsbelag 5 durch das eingeleitete Drehmoment M auf der Auslaufseite des Bremsbelags 5 sich radial nach innen neigen würde, was aber verhindert wird durch ein Anliegen der dem auslaufseitigen Trägerhorn 2 gegenüber liegenden Seitenfläche 55 des Bremsbelags 5 an der dem Bremsbelag 5 zugewandten Innenseite 21 des auslaufseitigen Trägerhorns 2. Durch das Anliegen dieser beiden Seiten 55 und 21 aneinander wirkt dem Moment M eine Reibkraft F_{R} entgegen, so dass auf diese Weise eine Drehbewegung des Bremsbelags 5 während eines Bremsvorgangs wirksam verhindert wird.

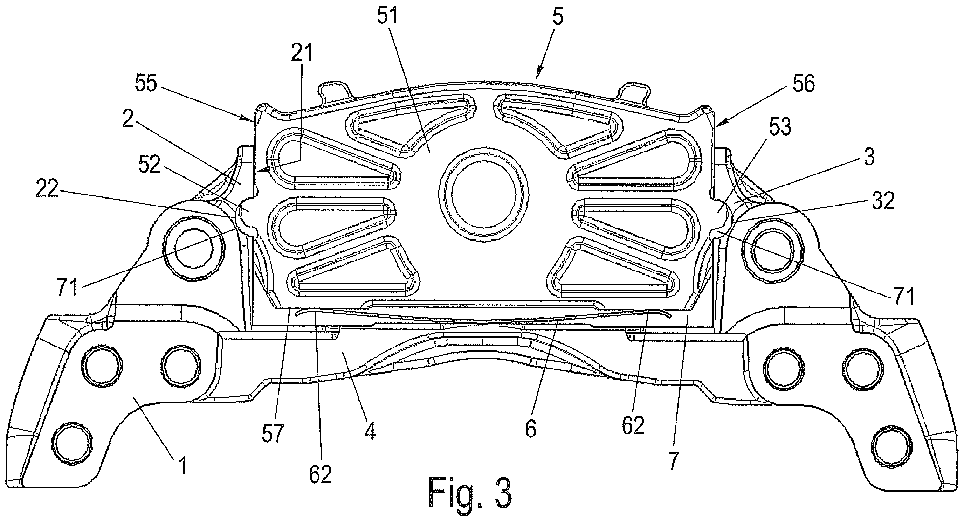

Die in der in Figur 3 dargestellte Ausführungsvariante eines nicht erfindungsgemäßen Belaghaltesystems ist die Belaghaltefeder 6 ebenfalls als Tellerfeder ausgebildet, wobei die Endbereiche 62 der Belaghaltefeder 6 an der Unterseite 57 des Bremsbelag 5 anliegen und der zentrale Bereich der als Blattfeder ausgebildeten Belaghaltefeder sich an dem Brückenteil 4 abstützt.

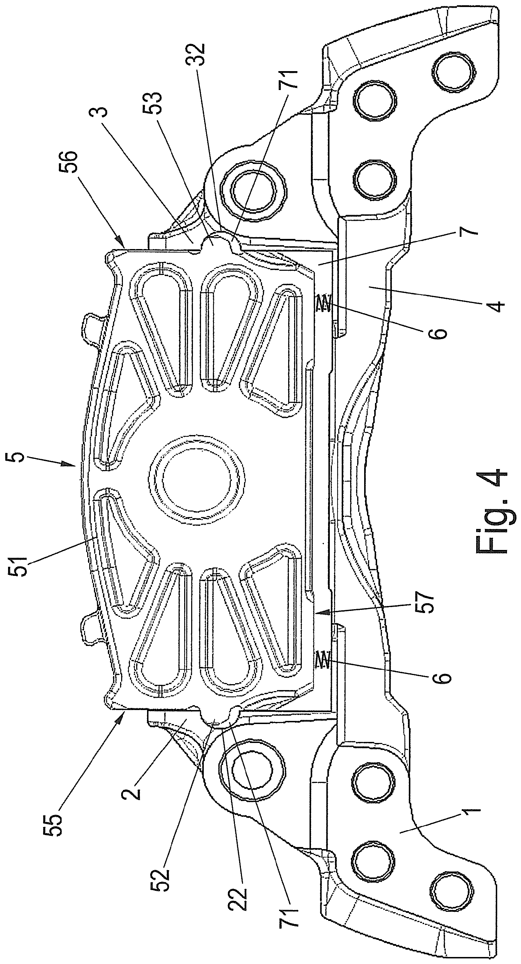

Bei der in Figur 4 dargestellten Ausführungsvariante des nicht erfindungsgemäßen Belaghaltesystems ist die Belaghaltefeder als Spiralfeder ausgebildet, wobei für jeden der Bremsbeläge 5 hier vorzugsweise zwei solcher Spiralfedern vorgesehen sind, die dem Bremsbelag 5 gegen das Brückenteil 4 nach oben in den Formschluss mit den Trägerhörnern 2, 3 drücken.

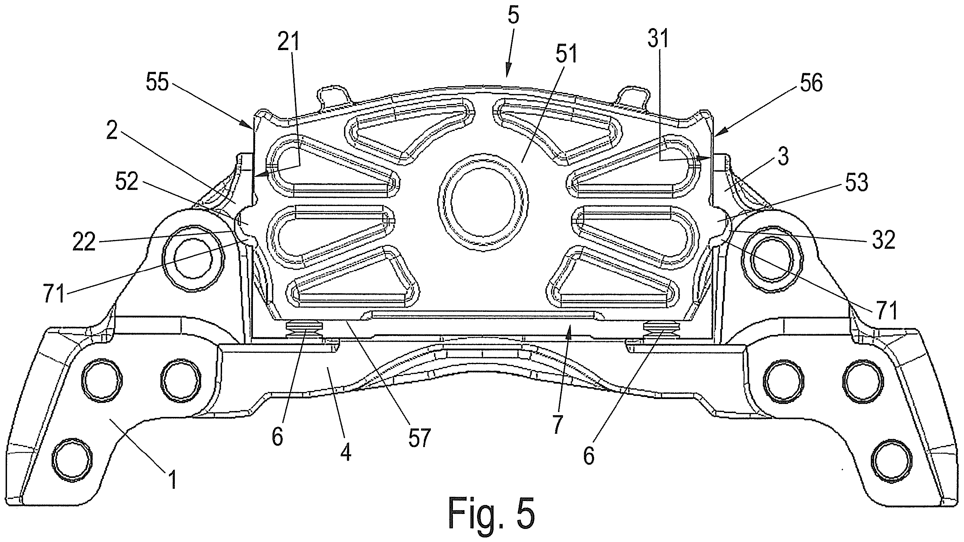

Bei der in Figur 5 gezeigten Ausführungsvariante des nicht erfindungsgemäßen Belaghaltesystems ist die Belaghaltefeder 6 in Form von zwei Tellerfedern ausgebildet, die wie in der in Figur 4 gezeigten Ausführungsvariante jeweils von der Unterseite 57 des Bremsbelag 5 nahe dessen einlaufseitigen bzw. nahe dessen auslaufseitigen Rand im Belagschacht 7 des Bremsbelags gegen die Oberseite des Brückenteils 4 in den Formschluss mit den Trägerhörnern 2, 3 drückt.

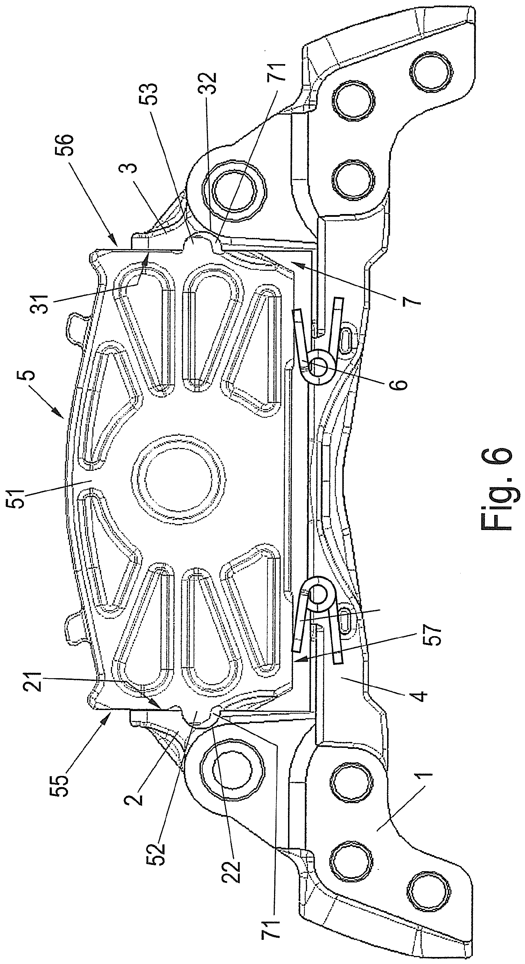

Schließlich ist in Figur 6 eine Ausführungsvariante eines nicht erfindungsgemäßen Belaghaltesystems gezeigt, bei dem die Belaghaltefeder 6 als Drehfeder ausgebildet ist, die in den Brückenteil 4 verankert ist und den Bremsbelag 5 in der angehobenen Position im Formschluss mit den Trägerhörnern 2, 3 hält.

Vorgeschlagen ist auch eine erfindungsgemäße Ausführungsform, bei der die Belaghaltefeder als Zugfeder ausgebildet ist, die sich an einem am Bremssattel befestigten Belaghaltebügel 8, wie er bei dem in Figur 1 gezeigten Belaghaltesystem gemäß dem Stand der Technik gezeigt ist, abstützt.

### Bezugszeichenliste

- 1: Bremsträger
- 2: Trägerhorn
- 3: Trägerhorn
- 4: Brückenteil
- 5: Bremsbelag
- 6: Belaghaltefeder
- 7: Belagschacht
- 8: Belaghaltebügel

- 21: Seite
- 22: Aussparung

- 32: Aussparung

- 51: Bremsbelagplatte
- 52: Vorsprung
- 53: Vorsprung
- 54: Aussparung
- 55: Seitenfläche
- 56: Seitenfläche
- 57: Unterseite

- 61: Haltebügel
- 62: Endbereich der Haltebügel

- 71: Lücke

- D: Drehpunkt
- D1: Drehpunkt
- F_{F}: Kraft
- F_{R}: Reibkraft
- HDR: Hauptdrehrichtung
- M: Drehmoment

## Patentansprüche

1. Belaghaltesystem einer Scheibenbremse eines Kraftfahrzeugs, insbesondere eines Nutzfahrzeugs, aufweisend
- einen eine Bremsscheibe übergreifenden Bremssattel (1),
- einen fahrzeugseitig ortsfesten Bremsträger (1) mit ein- und auslaufseitigen Trägerhörner (2, 3) und einem die Trägerhörner (2, 3) miteinander verbindenden Brückenteil (4),
- mindestens ein mit einer Belagträgerplatte (51) und einem daran befestigten Reibbelag versehener Bremsbelag (5), der in einem durch die Trägerhörner (2, 3) und das Brückenteil (4) gebildeten Belagschacht (7) geführt ist,
- wobei mindestens eines der Trägerhörner (2, 3) des Bremsträgers (1) und die diesen benachbarten Stützfläche der Belagträgerplatte (51) formschlüssig mit Spiel aneinander fixierbar sind,
- wobei der mindestens eine Bremsbelag (5) mittels einer sich quer zur Achsrichtung der Bremsscheibe erstreckenden und am Bremsbelag (5) radial auslenkbaren, als Blattfeder ausgebildeten Belaghaltefeder (6) federbelastet derart in dem Belagschacht (7) gehalten ist, dass die Belaghaltefeder (6) im montierten Zustand den Bremsbelag (5) von dem Brückenteil (4) des Bremsträger (1) weg spielfrei gegen die Trägerhörner (2, 3) drückt,
- wobei die Belaghaltefeder (6) zwischen einer dem Brückenteil (4) des Bremsträgers (1) zugewandten Seite des Bremsbelags (5) und dem Brückenteil (4) des Bremsträger (1) im Belagschacht (7) angeordnet ist, **dadurch gekennzeichnet, dass**
- die mindestens eine Belaghaltefeder (6) in einer Aussparung (54) an der dem Brückenteil (4) gegenüber liegenden Seite (57) der Belagträgerplatte (51) des Bremsbelags (5) gehalten ist.

2. Belaghaltesystem nach Anspruch 1, **dadurch gekennzeichnet, dass** die Belaghaltefeder (6) einen Haltebügel (61) aufweist, der die Belaghaltefeder (6) senkrecht zu deren Längserstreckung umgreift und mit dem die Belaghaltefeder (6) in der Aussparung (54) gehalten ist.

3. Belaghaltesystem einer Scheibenbremse eines Kraftfahrzeugs, insbesondere eines Nutzfahrzeugs, aufweisend
- einen eine Bremsscheibe übergreifenden Bremssattel (1),
- einen fahrzeugseitig ortsfesten Bremsträger (1) mit ein- und auslaufseitigen Trägerhörner (2, 3) und einem die Trägerhörner (2, 3) miteinander verbindenden Brückenteil (4),
- mindestens ein mit einer Belagträgerplatte (51) und einem daran befestigten Reibbelag versehener Bremsbelag (5), der in einem durch die Trägerhörner (2, 3) und das Brückenteil (4) gebildeten Belagschacht (7) geführt ist,
- wobei mindestens eines der Trägerhörner (2, 3) des Bremsträgers (1) und die diesen benachbarten Stützfläche der Belagträgerplatte (51) formschlüssig mit Spiel aneinander fixierbar sind,
- wobei der mindestens eine Bremsbelag (5) mittels einer sich quer zur Achsrichtung der Bremsscheibe erstreckenden und am Bremsbelag (5) radial auslenkbaren Belaghaltefeder (6) federbelastet derart in dem Belagschacht (7) gehalten ist, dass die Belaghaltefeder (6) im montierten Zustand den Bremsbelag (5) von dem Brückenteil (4) des Bremsträger (1) weg spielfrei gegen die Trägerhörner (2, 3) drückt,
**dadurch gekennzeichnet, dass**
- die Belaghaltefeder (6) als Zugfeder ausgebildet ist, die sich an einem am Bremssattel (1) befestigten Belaghaltebügel (8) abstützt.

4. Belaghaltesystem nach Anspruch 3, **dadurch gekennzeichnet, dass** die Belaghaltefeder (6) als Blattfeder ausgebildet ist.

5. Belaghaltesystem nach Anspruch 3, **dadurch gekennzeichnet, dass** die Belaghaltefeder (6) als Spiralfeder ausgebildet ist.

6. Belaghaltesystem nach Anspruch 3, **dadurch gekennzeichnet, dass** die Belaghaltefeder (6) als Tellerfeder ausgebildet ist.

7. Belaghaltesystem nach Anspruch 3, **dadurch gekennzeichnet, dass** die Belaghaltefeder (6) als Torsionsfeder ausgebildet ist.

8. Belaghaltesystem nach einem der vorstehenden Ansprüche, **dadurch gekennzeichnet, dass** die den Trägerhörnern (2, 3) des Bremsträgers (1) benachbarten Stützflächen der Belagträgerplatte (51) Vorsprünge (52, 53) aufweisen, die sich in jeweilige Hinterschneidungen (22, 32) an den der Belagträgerplatte (51) zugewandten Innenseiten der Trägerhörner (2, 3) erstrecken.

## Claims

1. Pad retention system of a disk brake of a motor vehicle, in particular a utility vehicle, having
- a brake caliper (1) which engages over a brake disk,
- a brake carrier (1) which is fixed onto the side of the vehicle and which has entry-side and exit-side carrier horns (2, 3) and a bridge component (4) which connects the carrier horns (2, 3) to each other,
- at least one brake pad (5), which is provided with a pad carrier plate (51) and a friction pad secured thereto and which is inserted in a pad shaft (7) formed by the carrier horns (2, 3) and the bridge component (4),
- wherein at least one of the carrier horns (2, 3) of the brake carrier (1) and the support face of the pad carrier plate (51) adjacent to it can be connected to each other in an interlocking manner with play,
- wherein the at least one brake pad (5) is retained in the pad shaft (7) in a spring-loaded condition by means of a pad holding spring (6) in the form of a leaf spring, which extends transversely relative to the axial direction of the brake disk and which can be radially deflected on the brake pad (5), in such manner that in the assembled condition the pad holding spring (6) presses the brake pad (5) away from the bridge component (4) of the brake carrier (1) without play against the carrier horns (2, 3),
- wherein the pad holding spring (6) is arranged between a side of the brake pad (5) facing toward the bridge component (4) of the brake carrier (1) and the bridge component (4) of the brake carrier (1) in the pad shaft (7),
**characterized in that**
- the at least one pad holding spring (6) is held in a recess (54) in the side (57) of the pad carrier plate (51) of the brake pad (5) opposite the bridge component (4).

2. Pad retention system according to Claim 1, **characterized in that** the at least one pad holding spring (6) has a holding bracket (61) which engages over the pad holding spring (6) perpendicularly to its longitudinal extension and by which the pad holding spring (6) is held in the recess (54).

3. Pad retention system of a disk brake of a motor vehicle, in particular a utility vehicle, comprising
- a brake caliper (1) that engages over a brake disk,
- a brake carrier (1) fixed onto the vehicle with carrier horns (2, 3) on the entry and exit sides and a bridge component (4) that connects the carrier horns (2, 3) to one another,
- at least one brake pad (5) provided with a pad carrier plate (51) and a friction pad attached thereto, which is inserted in a pad shaft (7) formed by the carrier horns (2, 3) and the bridge component (4),
- wherein at least one of the carrier horns (2, 3) of the brake carrier (1) and the support surface of the pas carrier plate (51) adjacent thereto can be connected to one another with interlock and with play,
- wherein the at least one brake pad (5) is retained in the pad shaft (7) in a spring-loaded condition by means of a pad holding spring (6) in the form of a leaf spring, which extends transversely relative to the axial direction of the brake disk and which can be radially deflected on the brake lining (5), in such manner that in the assembled condition the pad holding spring (6) presses the brake pad (5) away from the bridge component (4) of the brake carrier (1) without play against the carrier horns (2, 3),
**characterized in that**
- the pad holding spring (6) is in the form of a tension spring, which is supported on a pad holder bracket (8) attached onto the brake caliper (1).

4. Pad retention system according to Claim 3, **characterized in that** the pad holding spring (6) is in the form of a leaf spring.

5. Pad retention system according to Claim 3, **characterized in that** the pad holding spring (6) is in the form of a spiral spring.

6. Pad retention system according to Claim 3, **characterized in that** the pad holding spring (6) is in the form of a plate spring.

7. Pad retention system according to Claim 3, **characterized in that** the pad holding spring (6) is in the form of a torsion spring.

8. Pad retention system according to any of the preceding claims, **characterized in that** the support faces of the pad carrier plate (51) adjacent to the carrier horns (2, 3) of the brake carrier (1) have projections (52, 53) which extend in respective undercut portions (22, 32) in the inner sides of the carrier horns (2, 3) facing the pad carrier plate (51).

## Revendications

1. Système de retenue de garniture d'un frein à disque d'un véhicule automobile, notamment d'un véhicule utilitaire, comportant
- un étrier (1) de frein chevauchant un disque de frein,
- un flasque (1) de frein à poste fixe du côté du véhicule ayant des cornes (2, 3) de flasque du côté entrant et sortant et une partie (4) formant pontet et reliant les cornes (2, 3) du flasque l'une à l'autre,
- au moins une garniture (5) de frein, qui est pourvue d'une plaque (51) de support de garniture et d'une garniture de friction, qui y est fixée et qui est guidée dans un puits (7) de garniture formé par les cornes (2, 3) du flasque et par la partie (4) formant pontet,
- dans lequel au moins l'une des cornes (2, 3) du flasque (1) du frein et la surface d'appui, voisine de celui-ci, de la plaque (51) de support de garniture peuvent être immobilisées l'une par l'autre par rapport avec jeu à complémentarité de forme,
- dans lequel la au moins une garniture (5) de frein est retenue dans le puits (7) de garniture en étant soumise à un ressort (6) de retenue de garniture, s'étendant transversalement à la direction axiale du disque de frein pouvant s'écarter radialement à la garniture (5) de frein et constitué en ressort à lame, de manière à ce que le ressort (6) de retenue de la garniture pousse, à l'état monté, la garniture (5) de frein sur les cornes (2, 3) du flasque sans jeu, en s'éloignant de la partie (4) formant pontet du flasque (1) de frein,
- dans lequel le ressort (6) de retenue de la garniture est disposé entre un côté, tourné vers la partie (4) formant pontet du flasque (1) de frein, de la garniture (5) de frein et la partie (4) formant pontet du flasque (1) de frein dans le puits (7) de garniture,
**caractérisé en ce que**
- le au moins un ressort (6) de retenue de garniture est retenu dans un évidemment (54) du côté (57), opposé à la partie (4) formant pontet, de la plaque (51) de support de la garniture (5) de frein.

2. Système de retenue de garniture suivant la revendication 1, **caractérisé en ce que**
le ressort (6) de retenue de garniture a un étrier (61) de retenue, qui enserre le ressort (6) de retenue de la garniture, perpendiculairement à son étendue longitudinale et est retenu dans l'évidemment (54) par le ressort (6) de retenue de la garniture.

3. Système de retenue de garniture d'un frein à disque d'un véhicule automobile, notamment d'un véhicule utilitaire, comportant
- un étrier (1) de frein chevauchant un disque de frein,
- un flasque (1) de frein à poste fixe du côté du véhicule ayant des cornes (2, 3) de flasque du côté entrant et sortant et une partie (4) formant pontet et reliant les cornes (2, 3) du flasque l'une à l'autre,
- au moins une garniture (5) de frein, qui est pourvue d'une plaque (51) de support de garniture et d'une garniture de friction, qui y est fixée et qui est guidée dans un puits (7) de garniture formé par les cornes (2, 3) du flasque et par la partie (4) formant pontet.
- dans lequel au moins l'une des cornes (2, 3) du flasque (1) du frein et la surface d'appui, voisine de celui-ci, de la plaque (51) de support de garniture peuvent être immobilisées l'une par l'autre par rapport avec jeu à complémentarité de forme,
- dans lequel la au moins une garniture (5) de frein est retenue dans le puits (7) de garniture en étant soumise à un ressort (6) de retenue de garniture, s'étendant transversalement à la direction axiale du disque de frein pouvant s'écarter radialement à la garniture (5) de frein et constituée en ressort à lame, de manière à ce que le ressort (6) de retenue de la garniture pousse, à l'état monté, la garniture (5) de frein sur les cornes (2, 3) du flasque sans jeu, en s'éloignant de la partie (4) formant pontet du flasque (1) de frein,
**caractérisé en ce que**
- le ressort (6) de retenue de garniture est constitué en ressort de traction, qui s'appuie sur un étrier (8) de retenue de garniture fixé à l'étrier (1) de frein.

4. Système de retenue de garniture suivant la revendication 3, **caractérisé en ce que** le ressort (6) de retenue de la garniture est constitué en ressort à lame.

5. Système de retenue de garniture suivant la revendication 3, **caractérisé en ce que** le ressort (6) de retenue de la garniture est constitué en ressort spiral.

6. Système de retenue de garniture suivant la revendication 3, **caractérisé en ce que** le ressort (6) de maintien de la garniture est constitué en ressort à disque.

7. Système de retenue de garniture suivant la revendication 3, **caractérisé en ce que** le ressort (6) de maintien de la garniture est constitué en ressort de torsion.

8. Système de retenue de garniture suivant l'une des revendications précédentes, **caractérisé en ce que** les surfaces d'appui, voisines des cornes (2, 3) du flasque (1) de frein, de la plaque (51) de support de la garniture ont des saillies (52, 53), qui s'étendent dans des contredépouilles (22, 32) respectives sur les côtés intérieurs, tournés vers la plaque (51) de support de la garniture, des cornes (2, 3) du flasque.
